Europäisches Patentamt

(19) European Patent Office

Office européen des brevets

(11) Publication number: **0 195 634**
**B1**

(12) **EUROPEAN PATENT SPECIFICATION**

(45) Date of publication of patent specification: **23.05.90**

(51) Int. Cl.⁵: **B 23 K 35/30, B 23 K 35/365**

(21) Application number: **86301933.7**

(22) Date of filing: **17.03.86**

(54) Welding electrode.

(30) Priority: **22.03.85 US 714988**

(43) Date of publication of application:
**24.09.86 Bulletin 86/39**

(45) Publication of the grant of the patent:
**23.05.90 Bulletin 90/21**

(84) Designated Contracting States:
**BE DE FR GB IT SE**

(56) References cited:
**EP-A-0 046 368**
**FR-A-1 390 236**
**FR-A-2 149 935**
**GB-A-1 005 467**
**US-A-3 843 359**

**WELDING JOURNAL, vol. 57, no. 1, January 1978, pages 1s-8s, Miami, Florida, US; D.F. HASSON et al.: "Surfacing of 3.25% nickel steel with inconel 625 by the gas metal arc welding-pulsed arc process"**

(73) Proprietor: **Inco Alloys International, Inc.**
**Huntington West Virginia 25720 (US)**

(72) Inventor: **Shoemaker, Lewis Edward**
**218 Forest View Drive**
**Huntington West Virginia 25705 (US)**
Inventor: **Bates, Thomas Outland**
**2831 Saltwell Road**
**Huntington West Virginia 25705 (US)**

(74) Representative: **Hedley, Nicholas James Matthew**
**TZ Gold & Company 9 Staple Inn**
**London WC1V 7QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Technical field

The instant invention relates to the art of welding in general and more particularly to an electrode especially adapted for welding a nickel-base alloy over steel.

### Background art

Nickel-base alloys have long enjoyed considerable usage and are known to possess considerable advantages when employed in high temperature environments such as industrial turbines, flue gas scrubbers, jet engines, petrochemical installations, etc. These nickel alloys exhibit excellent high temperature strength characteristics. Moreover, many nickel-base alloys are highly resistant to corrosion normally associated with a wide variety of hot gases and corrosive liquids.

In particular, for specific applications, INCONEL alloy 625 clad steel offers a substantial cost savings over solid INCONEL alloy 625 while exhibiting comparable corrosion resistance to sulfur and acidified, chloride environments. (INCONEL is a trademark of the INCO family of companies).

However, when available welding electrodes are deposited on INCONEL alloy 625 clad steel, iron dilution from the steel substrate of the cladding can effectively lower the molybdenum content of the weld deposit to the point where it no longer offers corrosion resistance equivalent to the base metal.

### Summary of the invention

Accordingly, there is provided a welding electrode as defined in the following Claim 1 that provides a sound weld deposit on clad steel products. Even when diluted with iron from the underlying steel, the welding deposit offers equivalent corrosion resistance to that exhibited by the alloy.

### Preferred mode for carrying out the invention

Assignee of the instant invention manufactures a coated consumable welding electrode called INCONEL Welding Electrode 112. It is employed in shielded metal arc welding operations for joining both nickel-base alloys and carbon steels. However, as alluded to above, this electrode is deficient when welding clad steel.

Compositional data on INCONEL Welding Electrode 112 is shown in Table 1.

### TABLE 1
#### Chemical composition, % (deposited weld metal)

| | | | |
|---|---|---|---|
| Ni[a] | 55.0 max | Si | 0.75 max |
| C | 0.10 max | Cr | 20.0—23.0 |
| Mn | 1.0 max | Nb[b] | 3.15—4.15 |
| Fe | 7.0 max | Mo | 8.0—10.0 |
| S | 0.02 max | P | 0.03 max |
| | | Others | 0.50 max |

[a] Plus Co. Co 0.12 max when specified.
[b] Plus Ta

INCONEL alloy 625 (see U.S. Patent 3,160,500) is a high strength nickel-base alloy resistant to many forms of corrosive attack. Its nominal composition (major components) is given in Table 2.

### TABLE 2 (in weight %)

| | | | |
|---|---|---|---|
| Ni | balance | Fe | 0—5% |
| Cr | 20—23% | Co | 0—1% |
| Nb+Ta | 3—4% | Si | 0—0.5% |
| Mo | 8—10% | Al | 0—0.4% |
| C | 0—0.1% | Ti | 0—0.4% |

Extensive research was undertaken to develop a consumable welding electrode suitable for welding INCONEL alloy 625 clad steel for use in flue gas desulfurization scrubbers. The aggressive environment in these systems can cause debilitating pitting and crevice corrosion attack. It is accepted that molybdenum is effective for increasing the resistance of nickel-base and iron-base alloys to such attack. Indeed INCONEL alloy 625 and INCONEL alloy 625 clad steel are used in this environment. However, when using weld clad steel, the iron dilution from the steel substrate of the clad product lowers the molybdenum content of the weld to the point that it no longer exhibits corrosion resistance equivalent to the base material. Accordingly, different electrode formulations were considered.

As a result of extensive testing, Table 3 lists the chemical composition requirements for undiluted weld metal. An electrode depositing the following weld compositional ranges has been found to successfully weld INCONEL alloy 625 clad steel.

TABLE 3

| | Weight % | |
| Element | Min | Max |
| --- | --- | --- |
| C | 0 | 0.10 |
| Mn | 0 | 1.0 |
| Fe | 0 | 7.0 |
| P | 0 | 0.03 |
| S | 0 | 0.02 |
| Si | 0 | 0.80 |
| Cu | 0 | 0.50 |
| Ni | 52.0 | Balance |
| Cr | 20.0 | 23.0 |
| Nb+Ta | 0 | 4.20 |
| Mo | 11.0 | 13.0 |

The instant consumable electrode essentially utilizes INCONEL alloy 625 as the core wire and the flux formulation as shown in Table 4. The flux is formulated and deposited on the core wire in the usual manner.

TABLE 4

| | Range | Preferred |
| --- | --- | --- |
| Dry Mix (all in weight %) | | |
| Calcium carbonate | 10—40 | 23 |
| Cryolite | 10—35 | 21 |
| Titanium Dioxide | 10—30 | 14 |
| Magnetite | 0—10 | 3 |
| Molybdenum powder | 6—12 | 10 |
| Nickel-Niobium Powder | 0—7 | up to 7 |
| Chromium powder | 0—10 | 8 |
| Nepheline Syenite | 0—15 | 8 |
| Zirconium oxide | 0—5 | 1 |
| Periclase | 0—5 | 2 |
| Bentonite (extrusion aid) | 0—5 | 3 |
| Alginate (extrusion aid) | 0—5 | 0.5 |
| Natrosol (extrusion aid) | 0—5 | 0.25 |
| | | |
| Binder (% of weight of dry mix above) | | |
| Sodium silicate | 10—30 | 24 |
| Lithium silicate | 0—2 | 1.25 |
| Water | 0—2 | 0.25 |

The addition of niobium (as nickel niobium) to the flux is optional. When it is added, the niobium level of the deposit falls within the range specified for INCONEL Welding Electrode 112. However, omission of this flux ingredient causes a reduction in the niobium level of the deposit and significantly increases weld ductility.

Average all-weld-metal room temperature mechanical properties are shown below in Table 5.

TABLE 5

| UTS | 0.2% YS | El (%) | RA (%) | Rockwell hardness |
| --- | --- | --- | --- | --- |
| 109.2 ksi (753 MPa) | 77.5 ksi (534 MPa) | 19.1 | 22.9 | 98/100B |

3

The corrosion properties of the resulting weld were obtained in the following fashion.

A number of .25 inch (.64 cm) thick plates of steel were clad with a single .062 inch (.16 cm) thick layer of INCONEL alloy 625. A variety of gap configurations and a number of weld passes were utilized to make the following specimens. To protect the steel, a backing sheet of INCONEL alloy 625 was applied and the edges were welded.

The various specimens were immersed in a $SO_2$ saturated (pH<1) 23,750 ppm chloride (as NaCl) solution at 80°C (176°F) for 30 days. The testing conditions represent an environment which weldments would reasonably encounter.

Table 6 contains the chemical compositions of the evaluated weld materials. Heats 1, 3, and 4 are for purposes of comparison.

TABLE 6
Chemical compositions (in weight %)

| Welding electrode | C | Mn | Fe | S | Si | Cu | Ni | Cr | Al | Ti | Mg | Co | Mo | Nb+Ta | P | W |
|---|---|---|---|---|---|---|---|---|---|---|---|---|---|---|---|---|
| 1) INCONEL welding electrode 112 (standard) | 0.04 | 0.06 | 3.87 | 0.005 | 0.49 | 0.12 | 61.66 | 21.41 | 0.067 | 0.056 | 0.0015 | 0.062 | 8.81 | 3.53 | 0.007 | — |
| 2) Instant electrode | 0.04 | 0.04 | 2.49 | 0.004 | 0.48 | 0.12 | 59.68 | 21.72 | 0.047 | 0.044 | 0.0015 | 0.043 | 11.96 | 3.47 | 0.005 | — |
| 3) INCONEL alloy 625 filler metal (bare) | 0.04 | 0.06 | 1.95 | 0.002 | 0.16 | 0.14 | 62.79 | 22.02 | 0.16 | 0.26 | 0.042 | 0.035 | 9.05 | 3.50 | 0.005 | — |
| 4) Hastelloy* C-276 filler metal (bare) | <0.002 | 0.48 | 6.08 | — | 0.02 | 0.06 | Bal | 15.56 | — | — | — | 1.22 | 15.61 | — | 0.005 | 3.73 |

*Trademark of Cabot Corporation

Table 7 below lists immersion test data.

The specimens were tested as-produced, with the welds having been stainless steel brushed.

The test solution was prepared by dissolving reagent grade sodium chloride into distilled water. The solution was saturated with $SO_2$ gas prior to the start of the test and daily (weekdays) thereafter.

Three specimens each were placed in a TEFLON (Trademark of DuPont, E.I., de Nemours & Co., Inc.) cradle suspended in 4.5 L of corrodent contained in a 5 L resin reaction flask fitted with 12″ (30.48 cm) Graham condensers.

After 30 days immersion, specimens were cleaned first with BON AMI (Trademark of Faultless Starch Company) and then with methanol and chloroethane.

Specimens were evaluated in terms of mass loss corrosion rates and examined under 20× magnification for localized corrosion. Pit depths were measured with a depth gauge where possible. Where surfaces were irregular, pit depths were estimated with a 20× microscope scale.

TABLE 7

Immersion test data for INCONEL alloy 625 clad steel plate
with various welds, evaluated in $SO_2$ saturated (pH <1)
23,750 ppm chloride (as NaCl) at 80°C (176°F) for 30 days

| Specimen number | Welding electrode [1] | Corrosion rate (mpy) [2] | Center weld in clad | Comment edge weld | Cladding |
|---|---|---|---|---|---|
| 1 | 2 | <1 (.03 mm) | NLC[3] | NLC | NLC |
| 2 | 1 | <1 | NLC | NLC | NLC |
| 3 | 1 | <1 | NLC | NLC | 1 pit 1/16″ (1.6 mm) deep[4] |
| 4 | 2 | <1 | NLC | NLC | NLC |
| 5 | 1 | 3 (.07 mm) | High pit density up to 1/32″ (.8 mm deep) | NLC | NLC |
| 6 | 2 | <1 | NLC | NLC | NLC |
| 7 | 1 | <1 | NLC | NLC | NLC |
| 8 | 2 | <1 | NLC | NLC | NLC |
| 9 | 1 | <1 | NLC | NLC | NLC |
| 10 | 2 | <1 | NLC | NLC | NLC |
| 11 | 3 | <1 | NLC | NLC | NLC |
| 12 | 4 | <1 | NLC | NLC | NLC |

[1] See Table 6, Column 1
[2] mpy=mils (thousandths of an inch) per year
[3] NLC=No Localized Corrosion was clearly discernable.
[4] Adjacent to weld, where a black film from welding was left on the plate.

Specimens 3 and 5 suffered pitting of the backing plate and/or the cladding where a black film from welding with a coated electrode was not completely removed from the specimen by stainless steel brushing. The ferricyanide test indicated that the black film contained significant iron, which could form ferric chloride adjacent to the surface. This would create a severely aggressive, highly localized environment.

Specimen 5 suffered significant pitting in the center weld in the clad. As this weld was made with a standard electrode deposited directly onto steel, the pitting was as expected. Due to iron dilution in the weld, the Mo content of the weld surface exposed to the environment may be as low as 6-1/2 to 7%. Specimen 6 was welded similarly and it did not pit.

Specimens 11 and 12, with center welds in the clad of INCONEL Filler Metal 625 and HASTELLOY C-276, respectively, exhibited excellent corrosion resistance. However, these two welding rods are not flux covered and therefore are only useful in situations differing from those contemplated for the instant covered electrode. Rather, they have been utilized herein for comparison purposes.

**Claims**

1. A consumable electrode, the electrode comprising a core wire and a coating, the core wire including about 20% to about 23% chromium, about 8% to about 10% molybdenum, about 0% to about 5% iron, about 0% to about 1% cobalt, about 0% to about 0.5% silicon, about 0% to about 0.4% aluminum, about 0% to about 0.4% titanium, about 3% to about 4% niobium plus tantalum, the balance nickel and trace impurities, and the coating including about 10% to about 40% calcium carbonate, about 10% to about 35% cryolite, about 10% to about 30% titanium dioxide, about 6% to about 12% molybdenum, about 0% to about 7% nickel-niobium, about 0% to about 10% chromium, about 0% to about 15% nepheline syenite, about 0% to about 5% zirconium oxide, about 0% to about 5% periclase, about 0% to about 5% extrusion aids, and a binder.

2. The electrode according to Claim 1 wherein the binder comprises about 10% to about 34% of the weight of the coating and includes (in weight % of the coating) about 10% to 30% sodium silicate, about 0% to about 2% lithium silicate and about 0% to about 2% water.

3. A method of welding a nickel-chromium-molybdenum alloy clad steel workpiece which comprises using as the welding electrode an electrode comprising a core wire and a coating, the core wire including about 20% to about 23% chromium, about 8% to about 10% molybdenum, about 0% to about 5% iron, about 0% to about 1% cobalt, about 0% to about 0.5% silicon, about 0% to about 0.4% aluminum, about 0% to about 0.4% titanium, about 3% to about 4% niobium plus tantalum, the balance nickel and trace impurities, and the coating including about 10% to about 40% calcium carbonate, about 10% to about 35% cryolite, about 10% to about 30% titanium dioxide, about 6% to about 12% molybdenum, about 0% to about 7% nickel-niobium, about 0% to about 10% chromium, about 0% to about 15% nepheline syenite, about 0% to about 5% zirconium oxide, about 0% to about 5% periclase, about 0% to about 5% extrusion aids, and a binder.

4. The method according to Claim 3, wherein the binder comprises about 10% to about 34% of the weight of the coating and includes (in weight % of the coating) about 10% to 30% sodium silicate, about 0% to about 2% lithium silicate and about 0% to about 2% water.

5. The method according to Claim 3 or 4 wherein the cladding of the workpiece includes about 20% to about 23% chromium, about 3.15% to about 4.15% niobium plus tantalum, about 8% to about 10% molybdenum, about 0% to about 5% iron, about 0% to about 0.5% manganese, about 0% to about 0.4% aluminum about 0% to about 0.4% titanium, about 0% to about 0.5% silicon, about 0% to about 1% cobalt, the balance nickel and trace impurities.

6. The method according to any one of Claims 3 to 5 wherein the resulting weld deposit comprises about 20% to about 23% chromium, about 11% to about 13% molybdenum, about 0% to about 4.2% niobium plus tantalum, about 0% to about 1% manganese, about 0% to about 7% iron, about 0% to about 0.8% silicon, about 0% to about 0.5% copper, the balance nickel and trace impurities.

**Patentansprüche**

1. Schweißelektrode aus einem Kerndraht mit etwa 20 bis etwa 23% Chrom, etwa 8 bis 10% Molybdän, etwa 0 bis etwa 5% Eisen, etwa 0 bis etwa 1% Kobalt, etwa 0 bis etwa 0,5% Silizium, etwa 0 bis etwa 0,4% Aluminium, etwa 0 bis 0,4% Titan, etwa 3 bis 4% Niob und Tantal, Rest Nickel und Spuren von Verunreinigungen sowie einer Umhüllung mit etwa 10 bis etwa 40% Kalziumkarbonat, etwa 10 bis etwa 35% Kyrolith, etwa 10 bis etwa 30% Titandioxyd, etwa 6 bis 12% Molybdän, etwa 0 bis etwa 7% Nickel-Niob, etwa 0 bis 10% Chrom, etwa 0 bis etwa 15% Nephelinsyenit, etwa 0 bis etwa 5% Zirkoniumoxyd, etwa 0 bis etwa 5% Periklas und etwa 0 bis etwa 5% Extrusionshilfsmittel sowie einem Bindemittel.

2. Elektrode nach Anspruch 1, deren Bindemittel etwa 10 bis etwa 34 Gew.-% einer Umhüllung mit etwa 10 bis 30 Gew.-% Natriumsilikat, etwa 0 bis etwa 2 Gew.-% Lithiumsilikat und etwa 0 bis etwa 2 Gew.-% Wasser ausmacht.

3. Verfahren zum Aufschweißen einer Nickel-Chrom-Molybdän-Legierung auf ein Werkstück aus einem Stahl gekennzeichnet durch die Verwendung einer Schweißelektrode aus einem Kerndraht mit etwa 20 bis etwa 23% Chrom, etwa 8 bis etwa 10% Molybdän, etwa 0 bis etwa 5% Eisen, etwa 0 bis etwa 1% Kobalt, etwa 0 bis etwa 0,5% Silizium, etwa 0 bis etwa 0,4% Aluminium, etwa 0 bis etwa 0,4% Titan, etwa 3 bis etwa 4% Niob und Tantal, Rest Nickel und Spuren von Verunreinigungen sowie einer Umhüllung mit ewta 10 bis etwa 40% Kalziumkarbonat, etwa 10 bis etwa 35% Kyrolith, etwa 10 bis etwa 30% Titandioxyd, etwa 6 bis etwa 12% Molybdän, etwa 0 bis etwa 7% Niob, etwa 0 bis etwa 10% Chrom, etwa 0 bis etwa 15% Nephelinsyenit, etwa 0 bis etwa 5% Zirkoniumoxyd, etwa 0 bis etwa 5% Periklas, etwa 0 bis etwa 5% Extrusionshilfsmitteln und einem Bindemittel.

4. Verfahren nach Anspruch 3, dadurch gekennzeichnet, daß der Binder etwa 10 bis etwa 34 Gew.-% einer Umhüllung mit etwa 10 bis etwa 30 Gew.-% Natriumsilikat, etwa 0 bis etwa 2% Lithiumsilikat und etwa 0 bis etwa 2 Gew.-% Wasser ausmacht.

5. Verfahren nach Anspruch 3 oder 4, gekennzeichnet, durch eine Schweißplattierung mit etwa 20 bis

7

etwa 23% Chrom, etwa 3,15 bis etwa 4,15% Niob und Tantal, etwa 8 bis etwa 10% Molybdän, etwa 0 bis etwa 5% Eisen, etwa 0 bis etwa 0,5% Mangan, etwa 0 bis etwa 0,4% Aluminium, etwa 0 bis etwa 0,4% Titan, etwa 0 bis etwa 0,5% Silizium, etwa 0 bis etwa 1% Kobalt, Rest Nickel und Spuren von Verunreinigungen.

6. Verfahren nach einem der Ansprüche 3 bis 5, gekennzeichnet durch ein Schweißgut mit etwa 20 bis etwa 23% Chrom, etwa 11 bis etwa 13% Molybdän, etwa 0 bis etwa 4,2% Niob und Tantal, etwa 0 bis etwa 1% Mangan, etwa 0 bis etwa 7% Eisen, etwa 0 bis etwa 0,8% Silizium, etwa 0 bis etwa 0,5% Kupfer, Rest Nickel und Spuren von Verunreinigungen.

## Revendications

1. Electrode consommable, comprenant un fil métallique central et un revêtement, le fil central comprenant d'environ 20% à environ 23% de chrome, d'environ 8% à environ 0% de molybdène, d'environ 0% à environ 5% de fer, d'environ 0% à environ 1% de cobalt, d'environ 0% à environ 0,5% de silicium, d'environ 0% à environ 0,4% d'aluminium, d'environ 0% à environ 0,4 % de titane, d'environ 3% à environ 4% de niobium et de tantale, le reste consistant en nickel et en impuretés à l'état de traces, et le revêtement comprenant d'environ 10% à environ 40% de carbonate de calcium, d'environ 10% à environ 35% de cryolite, d'environ 10% à environ 30% de bioxyde de titane, d'environ 6% à environ 12% de molybdène, d'environ 0% à environ 7% de nickel-niobium, d'environ 0% à environ 10% de chrome, d'environ 0% à environ 15% de syénite de type néphéline, d'environ 0% à environ 5% d'oxyde de zirconium, d'environ 0% à environ 5% de périclase, d'environ 0% à environ 5% d'adjuvants d'extrusion, et un liant.

2. Electrode selon la revendication 1, dans laquelle le liant représente d'environ 10% à environ 34% du poids du revêtement, et comprend (en pourcentage en poids par rapport au revêtement) d'environ 10% à 30% de silicate, de sodium, d'environ 0% à environ 2% de silicate de lithium, et d'environ 0% à environ 2% d'eau.

3. Procédé de soudage d'une pièce en acier revêtue d'alliage nickel-chrome-molybdène, dans lequel on utilise comme électrode de soudage, une électrode comprenant un fil métallique central et un revêtement, le fil central comprenant d'environ 20% à environ 23% de chrom, d'environ 8% à environ 10% de molybdène, d'environ 0% à environ 5% de fer, d'environ 0% à environ 1% de cobalt, d'environ 0% à environ 0,5% de silicium, d'environ 0% à environ 0,4% d'aluminium, d'environ 0% à environ 0,4% de titane, d'environ 3% à environ 4% de niobium et de tantale, le reste consistant en nickel et en impuretés à l'état de traces, et le revêtement comprenant d'environ 10% à environ 40% de carbonate de calcium, d'environ 10% à environ 35% de cryolite, d'environ 10% à environ 30% de bioxyde de titane, d'environ 6% à environ 12% de molybdène, d'environ 0% à environ 7% de nickel-niobium, d'environ 0% à environ 10% de chrome, d'environ 0% à environ 15% de syénite de type néphéline, d'environ 0% à environ 5% d'oxyde de zirconium, d'environ 0% à environ 5% de périclase, d'environ 0% à environ 5% d'adjuvants d'extrusion, et un liant.

4. Procédé selon la revendication 3, dans lequel le liant représente d'environ 10% à environ 34% du poids du revêtement, et comprend (en pourcentage en poids par rapport au revêtement) d'environ 10% à 30% de silicate de sodium, d'environ 0% à environ 2% de silicate de lithium, et d'environ 0% à environ 2% d'eau.

5. Procédé selon la revendication 3 ou 4, dans lequel le revêtement de la pièce, comprend d'environ 20% à environ 23% de chrom, d'environ 3,15% à environ 4,15% de niobium et de tantale, d'environ 8% à environ 10% de molybdène, d'environ 0% à environ 5% de fer, d'environ 0% à environ 0,5% de manganèse, d'environ 0% à environ 0,4% d'aluminium, d'environ 0% à environ 0,4% de titane, d'environ 0% à environ 0,5% de silicium, d'environ 0% à environ 1% de cobalt, le reste consistant en nickel et en impuretés à l'état de traces.

6. Procédé selon l'une quelconque des revendications 3 à 5, dans lequel le dépôt de soudure résultant, comprend d'environ 20% à environ 23% de chrome, d'environ 11% à environ 13% de molybdène, d'environ 0% à environ 4,2% de niobium et de tantale, d'environ 0% à environ 1% de manganèse, d'environ 0% à environ 7% de fer, d'environ 0% à environ 0,8% de silicium, d'environ 0% à environ 0,5% de cuivre, le reste consistant en nickel et en impuretés à l'état de traces.